# EUROPÄISCHE PATENTSCHRIFT

(11) **EP 2 532 403 B1**
(45) Veröffentlichungstag und Bekanntmachung des Hinweises auf die Patenterteilung: **25.02.2015**
(21) Anmeldenummer: 12171295.4
(22) Anmeldetag: 08.06.2012
(51) Int. Cl.: B01D 21/24

(54) **Anordnung und Verfahren zur Entwässerung von Klärschlämmen bzw. Dickstoffen aus Kläranlagen mit integrierter Kompostierung**
Assembly and method for draining sludge and solids from sewage treatment plants with integrated composting
Agencement et procédé de drainage de boues d'épuration ou de matières visqueuses de stations d'épuration avec compostage intégré

(30) Priorität: 10.06.2011 DE 202011101847 U
(43) Veröffentlichungstag der Anmeldung: 12.12.2012
(73) Patentinhaber: Markgraf, Hannelore, D-38459 Mackendorf (DE)
(72) Erfinder: Markgraf, Hannelore, 38459 Mackendorf (DE)
(74) Vertreter: Gulde & Partner

(56) Entgegenhaltungen:
- EP-A2- 1 264 625
- DE-U1- 29 618 687
- DE-U1-202011 101 847
- GB-A- 543 865
- US-A- 5 536 420
- US-A1- 2009 095 672

## Beschreibung

Die Erfindung betrifft eine Anordnung zur Entwässerung von Klärschlämmen bzw. Dickstoffen aus Kläranlagen mit integrierter Kompostierung. Mittels eines auf den Boden eines Absetzbehälters, insbesondere ortsfest, installierten Hebers sind abgesetzte Feststoffe in Form von Klärschlamm kontinuierlich in einen Entwässerungsbehälter abziehbar, wobei ein den Entwässerungsbehälter aufnehmender Separator über seinen Ablauf das anfallende Rücklaufwasser wieder dem Absetzbehälter zuführt.

Gegenstand der Erfindung ist auch ein Verfahren zur Entwässerung von Klärschlämmen bzw. Dickstoffen mittels o. g. Anlage, wobei kontinuierlich Luft zugeführt wird, wodurch ein Faulen der Dickstoffe im Entwässerungsbehälter vermieden wird.

Abwässer aus Haushalten und der Industrie müssen vor ihrer Weiterbehandlung mechanisch vorgereinigt und von Feststoffpartikeln befreit werden. Letzteres vollzieht sich in Absetzbecken von Kläranlagen, aus denen der sich am Boden absetzende Klärschlamm bzw. die Dickstoffe ausgetragen werden muss/müssen. Die dann weitere sich anschließende Behandlung in Faultürmen zur Fortsetzung des Rottungsprozesses ist dem Fachmann bekannt und soll, da nicht Gegenstand der Erfindung, nicht weiter dargelegt werden.

Dem Stand der Technik gemäß werden abgesetzte Schlämme und Dickstoffe aus Absetzbecken bzw. -behältern durch eine dem Becken bzw. dem Behälter zugeordneten Pumpe abgezogen und dann einem Separator zur Trennung von Feststoffen und Abwasser zugeführt.

Ein beispielsweise bekanntes Verfahren und eine Anordnung zur Realisierung des Verfahrens sind in EP 09 46 241 B1 und in DE 296 18 687 U1 vorgeschlagen worden. Die hierin dargelegte Anlage zur Abwasserreinigung besitzt u. a. einen behälterförmigen Dickstoffabscheider in unmittelbarer Baueinheit mit einem Separator. Eine elektrische Tauchpumpe befindet sich im Behältersumpf des Dickstoffabscheiders und fördert über eine Druckleitung den Klärschlamm in einen topfförmigen Entwässerungseinsatz, der im oberen Bereich des Dickstoffabscheiders untergebracht ist. Das sich über dem Klärschlamm ansammelnde Abwasser wird, bis zu einem festgelegten Niveau, durch eine zweite elektrische Pumpe ausgetragen.

Die Anlage hat zwar eine vorteilhafterweise kompakte Bauweise, sie hat aber den Nachteil des Einsatzes von mindestens zwei elektrisch zu betreibenden Tauchpumpen, deren Förderhöhe zu beachten ist und die einen entsprechenden Energiebedarf besitzen sowie wartungstechnisch nur umständlich zu erreichen sind.
Auch Fragen des Unfallschutzes gegen Stromschlag bei einer havarierten elektrischen Tauchpumpe bleiben hier offen.

Daher wurden Überlegungen angestellt, mit außerhalb eines Absetzbeckens/-behälters betriebener Kompressoren in Verbindung mit Hebepumpen, diese Nachteile zu überwinden und Klärschlämme bzw. Dickstoffe aus einem Absetzbehälter zu entnehmen.
Lösungen dazu sind bekannt, wobei jedoch eine "integrierte" Kompostierung mit einhergehender Entwässerung des Klärschlamms in einem Separator nicht ohne eine zusätzliche elektrische Pumpe realisiert werden konnte.

Es ist daher Aufgabe der Erfindung, eine Anordnung zur Entwässerung von Klärschlämmen bzw. Dickstoffen zur Verfügung zu stellen, die die Installierung elektrischer Tauch- und anderer Förderpumpen in Absetzbecken von Kläranlagen vermeidet. Der mittels druckluftbetriebener Saugtechnik beförderter Klärschlamm soll außerhalb eines Absetzbehälters eine Teilentwässerung mit integrierter Kompostierung in einem Separator erfahren können. Die Entnahme von teilgetrocknetem Klärschlamm aus dem Separator soll einfacher werden und die Gesamtanordnung an Wartungsfreundlichkeit gewinnen. Eine weitere Aufgabe der Erfindung bestand darin, die Betriebsstabilität der Anlage zu verbessern und ein schnelles Faulen der entwässerten Dickstoffe im Entwässerungsbehälter, das zum Absterben der Bakterien führen kann, zu vermeiden.

Diese Aufgabe wird erfindungsgemäß gelöst durch die Merkmale im kennzeichnenden Teil des Anspruches 1 und 10 im Zusammenwirken mit den Merkmalen im Oberbegriff. Zweckmäßige Ausgestaltungen der Erfindung sind in den Unteransprüchen 2 bis 9 und 11 bis 13 dargelegt.

Die Erfindung wird demnach durch eine neuartige Anordnung von unter Geländeniveau verbauter und an sich größtenteils bekannter Elemente des Kläranlagenbaus realisiert. Es befindet sich insofern ein mit Ansauglöchern an seinem Umfang versehener runder, viereckiger oder mehreckiger Ansaugkorb auf dem Boden eines Absetzbeckens bzw. im Absetzbereich von Klärschlamm bzw. Dickstoff. Der Klärschlamm, der Dickstoffe einschließt, wird mittels einer seitlichen Druckluftzufuhr über einen Lufteinlassstutzen mit Druckluft von einem elektronisch steuerbaren Kompressor beaufschlagt. Der Lufteinlassstutzen ist im Winkel von 90° in unmittelbarer Nähe des Ausgangs am oberen Bereich des Ansaugkorbes und dort an dem vertikal am Ausgangskorb austretenden und vertikal nach oben führenden Steigrohr angebracht. Dadurch gelingt es, im Sinne einer Mammutpumpe (Druckluftheber), Klärschlamm bzw. Dickstoffe im Steigrohr nach oben und über eine mit leichtem Gefälle in ein Fallrohr mündende Transportleitung zu befördern. Der Lufteinlassstutzen weist vorzugsweise eine Wirbelkante zum Zerkleinern von Klumpen im Eingangsbereich des Steigrohrs auf, wodurch ein Verstopfen vermieden wird. Das Fallrohr ist innerhalb eines Separators, der beispielsweise als ein rundes geschlossenes Behältnis ausgebildet ist, in einer vertikalen, vorzugsweise zentralen Position eingebracht. Dabei ist es an seinem oberen Ende entlüftbar und ragt mit seinem unteren, ebenfalls offenen Ende, in einen Entwässerungsbehälter hinein, der entsprechende Auslässe zur Schlammentwässerung besitzt. Dadurch ist der am unteren Ende des Fallrohres austretende Klärschlamm bzw. Dickstoff gleichmäßig verteilt und mittels eines Pralltellers, der gegenüber dem Austritt des Fallrohres angeordnet ist, zur Teilentwässerung im Entwässerungsbehälter deponierbar, so dass die Schwimmschicht des Klärschlamms bzw. der Dickstoffe von unten beaufschlagbar ist. Nach entsprechendem Aufwuchs des der Entwässerung im Entwässerungsbehälter unterworfenen Klärschlamms/der Dickstoffe ist er bzw. sind sie als vorkompostiertes organisches Material über den Separator, der von oben geöffnet werden kann, aus dem Entwässerungsbehälter entnehmbar und einer Hygienisierung zuführbar. Die Hygienisierung ist dem Fachmann bekannt und kann z.B. mittels eines Thermokomposters erfolgen.

Alternativ kann eine Elektropumpe gemäß EP 0 946 241 B1 verwendet werden, wobei mehrere Pumpintervalle erforderlich sind.

Das sich im Bodenbereich des Separators sammelnde Rücklaufwasser aus dem Entwässerungsbehälter wird mittels einer entsprechenden Ableitung wieder dem Absetzbehälter zugeleitet. Der Separator weist zum Luftaustausch mit der Umgebung einen Bioluftfilter auf, der bevorzugt mit einem Natursubstrat als Filtermaterial befüllbar ist. Ein externer Zulauf führt schließlich mit Klärschlamm und Dickstoffen beladenes Abwasser in den Absetzbehälter.

Es ist denkbar, dass der Absetzbehälter mit einem weiteren Behälter, bevorzugt gleicher Ausbildung und Größe in Wirkverbindung steht, wobei zwischen beiden eine Trennwand angeordnet ist, an der in entsprechender Höhe ein Überlauf angebracht ist. Dadurch ist es möglich, das oberhalb des Klärschlamms/der Dickstoffe aufsteigende Abwasser abzuziehen und im zweiten Behälter beispielsweise einer biologischen Klärung zu unterziehen.

Der Ansaugkorb wird insbesondere ortsfest am Boden des Absetzbehälters gehalten, wobei jedoch auch eine definierte horizontale Beweglichkeit vorgesehen werden kann.

in einer weiteren Ausgestaltung der erfindungsgemäßen Anordnung kann der Entwässerungsbehälter so ausgestaltet sein, dass er zusätzlich mit Luft beaufschlagt werden kann. Die Luft kann z. B. mittels einer Pumpe über eine Zuleitung am Boden oder seitlich am Entwässerungsbehälter erfolgen um so den Entwässerungsbehälter zusätzlich mit Sauerstoff zu beschicken bzw. zu beaufschlagen.

Im Entwässerungsbehälter entsteht im unteren Bereich der Entwässerungszone, in welcher die Dickstoffe entwässert werden, dann von unten beaufschlagt, die bereits erwähnte Schwimmschicht, die nach der Entwässerung zu Rohkompost wird. Während Betriebsunterbrechungen oder Zulaufschwankungen können jedoch die Bakterien, die zum einen für die Vorkompostierung der entwässerten Dickstoffe und zum anderen für die Abwasserreinigung notwendig sind, verhungern. Sie stehen weder den Dickstoffen zur Verfügung noch können sie in geringen Mengen mit dem Rückwasser zur Reinigung des Abwassers dienen. Das gefährdet die Betriebsstabilität der Anlage.

Gegenstand der Erfindung ist deshalb auch ein Verfahren zur Entwässerung von Klärschlämmen bzw. Dickstoffen mittels o. g. Anlage, wobei eine schnelle Fäulnis der Dickstoffe im Entwässerungsbehälter vermieden werden soll, und die Bakterien im Entwässerungsbehälter, insbesondere die Dickstoffe, kontinuierlich mit Sauerstoff versorgt werden sollen, so dass ein Absterben von Bakterien verhindert werden kann. Das Verfahren ist dadurch gekennzeichnet, dass die Klärschlämme einschließlich Dickstoffe mittels Druckluft aus dem Absetzbehälter in den Entwässerungsbehälter transportiert werden, der sich in dem Separator befindet. Dort erfolgt die Entwässerung, wobei Rücklaufwasser über den sich am Separator bodenseitig befindenden Auslauftrichter in den Absetzbehälter zurückgeführt wird. Die Luftbeaufschlagung des Entwässerungsbehälters erfolgt dabei kontinuierlich.

In einer bevorzugten Variante wird die Luft kontinuierlich ein- bis mehrmals pro Tag mittels der seitlichen Druckluftzufuhr über den Lufteinlassstutzen von dem elektronisch steuerbaren Kompressor eingeblasen, so dass neben der Beförderung von Klärschlamm bzw. Dickstoffen mittels des druckluftbetriebenen Dickstoffhebers eine gleichmäßige Belüftung des Entwässerungsbehälters und Dickstoffes erfolgen kann.

Alternativ kann eine zusätzliche Beaufschlagung des Entwässerungsbehälters mit Luft auch über eine Zuleitung am Boden oder seitlich am Entwässerungsbehälter erfolgen um so den Entwässerungsbehälter kontinuierlich zu belüften.

Diese - vorzugsweise mehrfache - Luftbeförderung in den Entwässerungsbehälter hat den Vorteil, dass die Dickstoffe weitgehend am Faulen gehindert werden und die Bakterien nicht absterben. Dadurch bleiben die Dickstoffe als Nahrungsvorrat für die Mikroorganismen auch im Klärwasser erhalten und sterben nicht ab. Ein aufwändiges erneutes Animpfen zum Aufbau von Bakterienkulturen nach eventueller Betriebsunterbrechung oder bei Zulaufschwankungen kann entfallen.
Vorzugsweise erfolgt das Beaufschlagen mit Luft mindestens zweimal/pro Tag. Damit kann auch die Rücklaufwassermenge erhöht werden. Durch das bevorzugte mehrfache Einspeisen von Luft vorzugsweise über die Druckluftleitung wird regelmäßig über das Rücklaufwasser vom Entwässerungsbehälter in das Absetzbecken ein Teil der Dickstoffe als frische Nahrung den Bakterien zugeführt.

Die Betriebsstabilität der Anlage kann durch die kontinuierliche Luftbeschickung wesentlich länger gewährleistet werden.

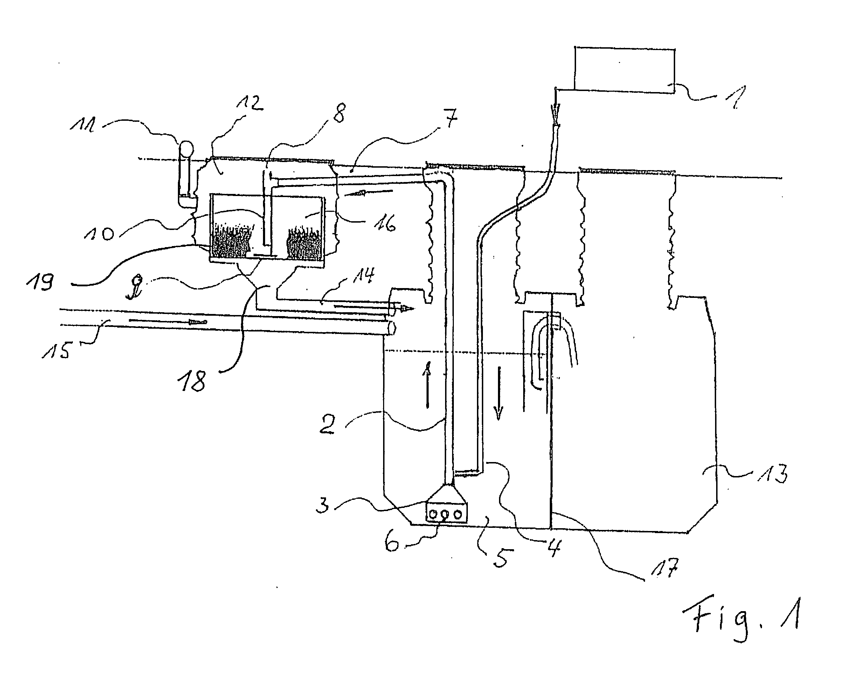

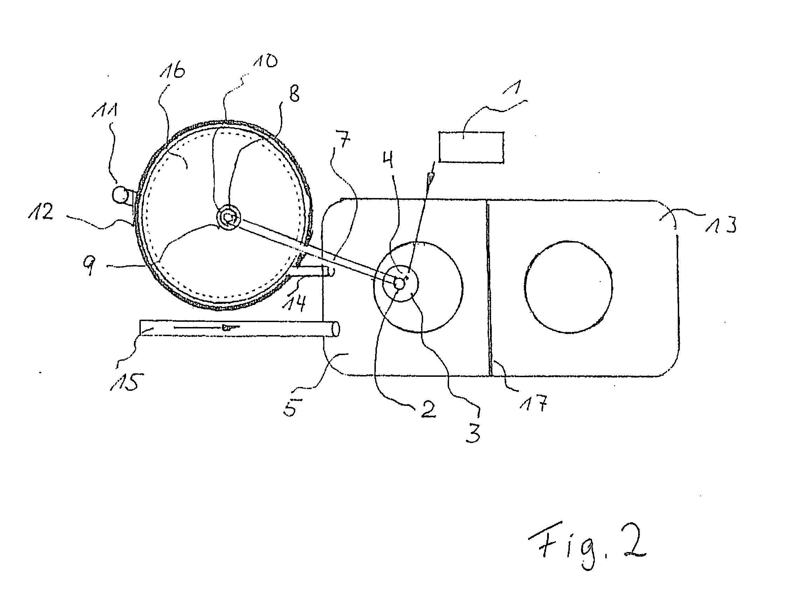

Die Erfindung soll nachfolgend anhand eines Ausführungsbeispiels näher erläutert werden. Dazu wird auf die Figuren 1 und 2 verwiesen.

Es zeigen:
- Figur 1:: Eine prinzipielle Schnittdarstellung der erfindungsgemäßen Anordnung,
- Figur 2:: Draufsicht gemäß Figur 1

Auf dem Boden eines Absetzbehälters 5 befindet sich ein Ansaugkorb 3, der mittels Druckluft aus einem Kompressor 1 beaufschlagt ist. Der Eintritt der Druckluft erfolgt über einen Drucklufteinlassstutzen 4, der im Winkel von 90° seitlich an einem vertikalen Steigrohr 2 angebracht ist. Der Lufteinlassstutzen 4 ist kurz hinter dem zentrisch aus dem oben am Ansaugkorb 3 austretenden Steigrohr 2 befestigt und besitzt bevorzugt eine Wirbelkante. Der Ansaugkorb 3, der beispielsweise in seinem unteren Teil zylindrisch ausgebildet ist, besitzt dort an seinem Umfang Ausgangslöcher 6 mit einem Durchmesser, der bevorzugt geringer ist als der Durchmesser des Steigrohres 2. Das Steigrohr 2 geht kurz vor der verschlossenen Öffnung des Absetzbehälters 5 unter Geländeniveau und in einem Winkel von ca. 15° in eine mit einem Gefälle geneigte Transportleitung 7 über, die ihrerseits in ein vertikal ausgerichtetes Fallrohr 10 führt, welches den abgezogenen Klärschlamm bzw. die Dickstoffe 19 bevorzugt zentrisch in einen Entwässerungsbehälter 16 entlässt. Der Entwässerungsbehälter 16 ist innerhalb eines ihn umgebenden Separators 12 angeordnet, wobei über entsprechend seitlich und im Boden des Entwässerungsbehälters 16 eingebrachten Auslässen Rücklaufwasser 14 von einem Auslauftrichter 18 des Separators 12 aufgenommen und zur Haltung eines definierten Flüssigkeitsniveaus von zu behandelndem Abwasser in den Absetzbehälter 5 zurückführbar ist.

Das in den Entwässerungsbehälter 16 ragende Fallrohr 10 ist an seinen beiden Enden offen, wobei es oben - in Richtung der verschlossenen Öffnung des Separators 12 - mit einem Entlüfter 8 in den Separator 12 versehen ist und im Bereich seines unteren offenen Endes auf einen definiert beabstandeten Prallteller 9 weist, damit die Verteilung des in den Entwässerungsbehälter 16 beförderten Klärschlamms bzw. der Dickstoffe 19 gleichmäßig stattfindet, so dass deren Schwimmschicht von unten beaufschlagbar ist und die sonst nicht zu vermeidende Verstopfung des Fallrohres 10 vermieden wird. Ein Zulauf 15 noch nicht entwässerten Klärschlamms bzw. von Dickstoffen 19 führt oberhalb des Flüssigkeitsniveaus in den Absetzbehälter 5.

Der Separator 12 besitzt, zwecks Luftaustausches mit der Umgebung, mindestens einen Bioluftfilter 11.

Es kann vorgesehen werden, dass der Absetzbehälter 5 mit einem z. B. baugleichen weiteren Behälter 13 zum Zwecke einer beispielsweise biologischen Klärung des hierein übertretenden Abwassers gekoppelt ist, wobei beide Behälter über eine Trennwand 17 voneinander getrennt sind.

Der Separator 12 kann an seiner Oberseite, etwa in Höhe Geländeniveau, geöffnet werden, damit diskontinuierlich aus dem Entwässerungsbehälter 16 teilentwässerter Klärschlamm bzw. teilentwässerte Dickstoffe 19 entnommen werden können, die dann einer weiteren - hier nicht weiteren darzulegenden - Stufe der Hygienisierung unterworfen werden.

Die Vorteile der Erfindung können gegenüber dem Stand der Technik darin gesehen werden:
- Verzicht auf den Einsatz elektrisch betriebener Tauch- und Förderpumpen in der gesamten Anordnung,
- Teilentwässerung von Klärschlamm und Dickstoffen mit bereits parallel einhergehender Kompostierung innerhalb des im Separator enthaltenen Entwässerungsbehälters,
- Verminderung des Wartungsaufwandes und hoher Bedienkomfort der erfindungsgemäßen Anordnung,
- unkomplizierter und kostengünstiger Aufbau,
- Möglichkeit der Kopplung mit einer biologischen Abwasserklärung,
- Möglichkeit der Nahrungsspeicherung für die Bakterien.

### Bezugszeichenliste

- 1: Kompressor
- 2: Steigrohr
- 3: Ansaugkorb
- 4: Lufteinlassstutzen
- 5: Absetzbehälter
- 6: Ansauglöcher
- 7: Transportleitung
- 8: Entlüfter
- 9: Prallteller
- 10: Fallrohr
- 11: Bioluftfilter
- 12: Separator
- 13: Behälter
- 14: Rücklaufwasser
- 15: Zulauf
- 16: Entwässerungsbehälter
- 17: Trennwand
- 18: Auslauftrichter
- 19: Klärschlamm bzw. Dickstoff

## Patentansprüche

1. Anordnung zur Entwässerung von Klärschlämmen bzw. Dickstoffen (19) aus Kläranlagen mit integrierter Kompostierung, **gekennzeichnet dadurch, dass** sich in einem Absetzbehälter (5) an dessen Boden oder im Absetzbereich ein Ansaugkorb (3) mit an seinem Umfang verteilten Ansauglöchern (6) befindet, wobei der Ansaugkorb (3) an seiner Oberseite über ein Steigrohr (2) mit einem daran im Winkel von 90° zur Fördereinrichtung des Klärschlamms/der Dickstoffe (19) angebrachten Lufteinlassstutzens (4) für Druckluft verfügt, das in ein Fallrohr (10) mündet, welches seinerseits vertikal in einen Entwässerungsbehälter (16) geführt ist, wobei letzterer von einem ihn umgebenden Separator (12) aufgenommenen wird und der Separator (12) bodenseitig einen Auslauftrichter (18) für Rücklaufwasser (14) besitzt, das neben dem Zulauf (15) für weiteres mit Feststoffen beladenes Abwasser parallel in den Absetzbehälter (5) führbar ist.

2. Anordnung zur Entwässerung von Klärschlämmen bzw. Dickstoffen (19) aus Kläranlagen nach Anspruch 1, **gekennzeichnet dadurch, dass** eine Transportleitung (7) zwischen dem vertikal positionierten Fallrohr (10) und dem vertikalen Teil des Steigrohrs (2) mit einem Gefälle in Richtung des Fallrohrs (10) versehen ist.

3. Anordnung zur Entwässerung von Klärschlämmen bzw. Dickstoffen (19) aus Kläranlagen nach Anspruch 1 oder 2, **gekennzeichnet dadurch, dass** ein Kompressor (1) Druckluft über den Lufteinlassstutzen (4) in die Steigleitung einbringt, wobei der Lufteinlassstutzen (4) möglichst nahe oberhalb des Ansaugkorbes (3) am Steigrohr (2) angebracht ist und vorzugsweise eine Wirbelkante aufweist.

4. Anordnung zur Entwässerung von Klärschlämmen bzw. Dickstoffen (19) aus Kläranlagen nach einem der Ansprüche 1 bis 3, **gekennzeichnet dadurch, dass** die am Umfang des Ansaugkorbes (3) eingebrachten Ansauglöcher (6) vorzugsweise geringeren Durchmessers sind als es der Durchmesser des Steigrohrs (2) ist.

5. Anordnung zur Entwässerung von Klärschlämmen bzw. Dickstoffen (19) aus Kläranlagen nach einem der Ansprüche 1 bis 4, **gekennzeichnet dadurch, dass** der Separator (12) über einen Bioluftfilter (11), der mit einem Natursubstrat befüllt ist, mit der Umgebung geruchsneutral in Wirkverbindung steht.

6. Anordnung zur Entwässerung von Klärschlämmen bzw. Dickstoffen (19) aus Kläranlagen nach einem der Ansprüche 1 bis 5, **gekennzeichnet dadurch, dass** das Fallrohr (10) an seinem oberen Ende eine Entlüftung (8) besitzt.

7. Anordnung zur Entwässerung von Klärschlämmen bzw. Dickstoffen (19) aus Kläranlagen nach einem der Ansprüche 1 bis 6, **gekennzeichnet dadurch, dass** der Absetzbehälter (5) über eine Trennwand (17) mit einem weiteren Behälter (13) verbunden ist, wobei mittels eines Überlaufes das übertretende Abwasser in diesem einer biologischen Abwassereinigung zuführbar ist.

8. Anordnung zur Entwässerung von Klärschlämmen bzw. Dickstoffen (19) aus Kläranlagen nach einem der Ansprüche 1 bis 7, **gekennzeichnet dadurch, dass** unterhalb des in den Entwässerungsbehälter (16) ragenden Fallrohrs (10) ein Prallteller (9) angebracht ist, so dass die Schwimmschicht des Klärschlamms bzw. der Dickstoffe (19) von unten beaufschlagbar ist.

9. Anordnung zur Entwässerung von Klärschlämmen bzw. Dickstoffen (19) aus Kläranlagen nach einem der Ansprüche 1 bis 8, **gekennzeichnet dadurch, dass** über eine Zuleitung am Boden oder seitlich am Entwässerungsbehälter (16) dieser zusätzlich mit Luft beaufschlagt wird, um ein schnelles Faulen der Dickstoffe in der Entwässerungszone zu verhindern.

10. Verfahren zur Entwässerung von Klärschlämmen bzw. Dickstoffen mittels einer Kläranlage nach einem der Ansprüche 1 bis 9, **gekennzeichnet dadurch, dass** die Klärschlämme einschließlich Dickstoffe mittels Druckluft aus dem Absetzbehälter (5) in den Entwässerungsbehälter (16) transportiert werden, der sich in dem Separator (12) befindet, dort die Entwässerung stattfindet, wobei Rücklaufwasser (14) über den sich am Separator (12) bodenseitig befindenden Auslauftrichter (18) in den Absetzbehälter (5) zurückgeführt wird, und wobei zur Vermeidung des Faulens der Dickstoffe und um die Dickstoffe als Nahrungsvorrat für die Bakterien zu erhalten, eine kontinuierliche Luftbeaufschlagung der Anlage erfolgt.

11. Verfahren nach Anspruch 10, **dadurch gekennzeichnet, dass** die Druckluft kontinuierlich mindestens einmal pro Tag in den Absetzbehälter eingeleitet wird, wodurch auch bereits entwässerte Dickstoffe kontinuierlich durchlüftet werden und ein Faulen vermieden wird.

12. Verfahren nach Anspruch 10 oder 11, **dadurch gekennzeichnet, dass** die Druckluft mindestens zweimal pro Tag eingeleitet wird.

13. Verfahren nach Anspruch 10, **dadurch gekennzeichnet, dass** der Entwässerungsbehälter über eine zusätzliche Leitung von unten oder seitlich kontinuierlich mit Luft beschickt wird, so dass die entwässerten Dickstoffe kontinuierlich durchlüftet werden und ein Faulen vermieden wird.

## Claims

1. An assembly for draining sludge and solids (19) from sewage treatment plants with integrated composting, **characterized in that** a suction basket (3) with suction holes (6) distributed on its circumference is located in a settling tank (5), at the bottom thereof or in the settling area, wherein the suction basket (3) has on its upper side a riser pipe (2) with an air inlet pipe (4) for compressed air attached thereto at an angle of 90° to the direction of conveying of the sludge/solids (19), said riser pipe opening into a downpipe (10) which for its part is guided vertically into a drainage tank (16), wherein the latter is held by a separator (12) which surrounds it and the separator (12) has at the bottom a discharge hopper (18) for return water (14) which can be guided into the settling tank (5) in parallel alongside the inlet (15) for further wastewater loaded with solids.

2. The assembly for draining sludge and solids (19) from sewage treatment plants according to claim 1, **characterized in that** a transport line (7) between the vertically positioned downpipe (10) and the vertical part of the riser pipe (2) is provided with a downward slope toward the downpipe (10).

3. The assembly for draining sludge and solids (19) from sewage treatment plants according to claim 1 or 2, **characterized in that** a compressor (1) introduces compressed air into the riser line via the air inlet pipe (4), wherein the air inlet pipe (4) is attached to the riser pipe (2) as close as possible above the suction basket (3) and preferably has a vortex-inducing edge.

4. The assembly for draining sludge and solids (19) from sewage treatment plants according to any of claims 1 to 3, **characterized in that** the suction holes (6) formed on the circumference of the suction basket (3) preferably have a diameter that is smaller than the diameter of the riser pipe (2).

5. The assembly for draining sludge and solids (19) from sewage treatment plants according to any of claims 1 to 4, **characterized in that** the separator (12) is operatively connected to the surrounding environment in an odour-neutral manner via a bio air filter (11) which is filled with a natural substrate.

6. The assembly for draining sludge and solids (19) from sewage treatment plants according to any of claims 1 to 5, **characterized in that** the downpipe (10) has a vent (8) at its upper end.

7. The assembly for draining sludge and solids (19) from sewage treatment plants according to any of claims 1 to 6, **characterized in that** the settling tank (5) is connected to a further tank (13) via a separating wall (17), wherein the wastewater passing over into said further tank can be fed to a biological wastewater treatment process by means of an overflow.

8. The assembly for draining sludge and solids (19) from sewage treatment plants according to any of claims 1 to 7, **characterized in that** a baffle plate (9) is fitted below the downpipe (10) projecting into the drainage tank (16), so that the floating layer of the sludge or solids (19) can be acted upon from below.

9. The assembly for draining sludge and solids (19) from sewage treatment plants according to any of claims 1 to 8, **characterized in that** air is additionally supplied to the drainage tank (16) via a feed line at the bottom or at the side in order to prevent rapid rotting of the solids in the drainage zone.

10. A method for draining sludge and solids by means of a water treatment plant according to any of claims 1 to 9, **characterized in that** the sludge including solids is transported by means of compressed air from the settling tank (5) into the drainage tank (16), which is located in the separator (12), and the drainage takes place there, wherein return water (14) is fed back into the settling tank (5) via the discharge hopper (18) located at the bottom of the separator (12), and wherein a continuous supply of air to the plant takes place in order to avoid rotting of the solids and in order to preserve the solids as a food supply for the bacteria.

11. The method according to claim 10, **characterized in that** the compressed air is continuously introduced into the settling tank at least once per day, as a result of which even solids that have already been drained can be continuously aerated and rotting is avoided.

12. The method according to claim 10 or 11, **characterized in that** the compressed air is introduced at least twice per day.

13. The method according to claim 10, **characterized in that** air is continuously sent to the drainage tank via an additional line from below or from the side, so that the drained solids are continuously aerated and rotting is avoided.

## Revendications

1. Agencement pour le drainage de boues d'épuration ou respectivement de matières visqueuses (19) à partir de stations d'épuration avec compostage intégré, **caractérisé en ce que**, dans un réservoir de décantation (5), il y a, sur son fond ou dans la zone de décantation, un panier d'aspiration (3) avec des trous d'aspiration (6) répartis sur sa périphérie, le panier d'aspiration (3) disposant, au niveau de son côté supérieur, d'un tube montant (2) avec une tubulure d'entrée d'air (4) pour de l'air comprimé qui y est placée en formant un angle de 90° avec le dispositif de transport de la boue d'épuration / des matières visqueuses (19), et le tube montant débouche dans un tube de descente (10) qui est de son côté guidé verticalement dans un réservoir de drainage (16), ce dernier étant logé par un séparateur (12) qui l'entoure, et le séparateur (12) ayant, côté fond, une trémie de décharge (18) pour de l'eau de retour (14) qui peut être conduite parallèlement dans le réservoir de décantation (5) près de l'amenée (15) pour des eaux d'évacuation supplémentaires chargées en matières solides.

2. Agencement pour le drainage de boues d'épuration ou respectivement de matières visqueuses (19) à partir de stations d'épuration selon la revendication 1, **caractérisé en ce qu'**une conduite de transport (7) est munie d'une pente dirigée vers le tube de descente (10) entre le tube de descente (10) positionné verticalement et la partie verticale du tube montant (2).

3. Agencement pour le drainage de boues d'épuration ou respectivement de matières visqueuses (19) à partir de stations d'épuration selon la revendication 1 ou 2, **caractérisé en ce qu'**un compresseur (1) introduit, par le biais de la tubulure d'entrée d'air (4), de l'air comprimé dans la conduite montante, la tubulure d'entrée d'air (4) étant mise en place le plus près possible au-dessus du panier d'aspiration (3) sur le tube montant (2) et présentant de préférence une arête de turbulence.

4. Agencement pour le drainage de boues d'épuration ou respectivement de matières visqueuses (19) à partir de stations d'épuration selon une des revendications 1 à 3, **caractérisé en ce que** les trous d'aspiration (6) mis en place sur la périphérie du panier d'aspiration (3) ont de préférence un diamètre plus petit que le diamètre du tube montant (2).

5. Agencement pour le drainage de boues d'épuration ou respectivement de matières visqueuses (19) à partir de stations d'épuration selon une des revendications 1 à 4, **caractérisé en ce que** le séparateur (12) est en interaction avec l'environnement d'une façon inodore par le biais d'un bio-filtre à air (11) qui est rempli d'un substrat naturel.

6. Agencement pour le drainage de boues d'épuration ou respectivement de matières visqueuses (19) à partir de stations d'épuration selon une des revendications 1 à 5, **caractérisé en ce que** le tube de descente (10) possède une désaération (8) à son extrémité supérieure.

7. Agencement pour le drainage de boues d'épuration ou respectivement de matières visqueuses (19) à partir de stations d'épuration selon une des revendications 1 à 6, **caractérisé en ce que** le réservoir de décantation (5) est raccordé à un autre réservoir (13) par le biais d'une cloison de séparation (17), les eaux usées qui débordent pouvant être conduites à un nettoyage biologique des eaux usées au moyen d'un trop-plein présent dans l'autre réservoir.

8. Agencement pour le drainage de boues d'épuration ou respectivement de matières visqueuses (19) à partir de stations d'épuration selon une des revendications 1 à 7, **caractérisé en ce qu'**une plaque d'impact (9) est mise en place au-dessous du tube de descente (10) qui dépasse dans le réservoir de drainage (16), de telle sorte que la couche flottante des boues d'épuration ou des matières visqueuses (19) peut être alimentée par en bas.

9. Agencement pour le drainage de boues d'épuration ou respectivement de matières visqueuses (19) à partir de stations d'épuration selon une des revendications 1 à 8, **caractérisé en ce que** le réservoir de drainage (16) peut, par le biais d'une conduite d'amenée sur le fond ou sur le côté du réservoir de drainage (16), être alimenté de façon supplémentaire en air afin d'empêcher une putréfaction rapide des matières visqueuses dans la zone de drainage.

10. Procédé pour le drainage de boues d'épuration ou respectivement de matières visqueuses (19) au moyen d'une station d'épuration selon une des revendications 1 à 9, **caractérisé en ce que** les boues d'épuration y compris les matières visqueuses sont transportées au moyen d'air comprimé à partir du réservoir de décantation (5) jusque dans le réservoir de drainage (16) qui se trouve dans le séparateur (12), **en ce que** le drainage a lieu à cet endroit, de l'eau de retour (14) étant renvoyée dans le réservoir de décantation (5) par le biais de la trémie de décharge (18) située côté fond sur le séparateur (12), et une alimentation continue en air de la station s'effectuant pour éviter la putréfaction des matières visqueuses (19) et pour obtenir les matières visqueuses (19) en tant que réserve d'aliments pour les bactéries.

11. Procédé selon la revendication 10, **caractérisé en ce que** l'air comprimé est introduit dans le réservoir de décantation de façon continue au moins une fois par jour, ce qui fait que des matières visqueuses (19) déjà drainées sont également aérées et qu'une putréfaction est évitée.

12. Procédé selon la revendication 10 ou 11, **caractérisé en ce que** l'air comprimé est introduit au moins deux fois par jour.

13. Procédé selon la revendication 10, **caractérisé en ce que** le réservoir de drainage est alimenté en air de façon continue par en bas ou latéralement par le biais d'une conduite supplémentaire de telle sorte que les matières visqueuses drainées sont aérées de façon continue et qu'une putréfaction est évitée.
